# EUROPÄISCHE PATENTSCHRIFT

(11) **EP 1 385 073 B1**
(45) Veröffentlichungstag und Bekanntmachung des Hinweises auf die Patenterteilung: **21.09.2011**
(21) Anmeldenummer: 03016118.6
(22) Anmeldetag: 16.07.2003
(51) Int. Cl.: G05D 23/19, F02M 31/125, F02D 41/22, G05D 23/24

(54) **Verfahren und Vorrichtung zur Funktionsprüfung einer elektrischen Heizeinrichtung**
Method and apparatus for testing the functionality of an electric heating device
Procédé et dispositif pour le contrôle du fonctionnement d'un appareil de chauffage électrique

(30) Priorität: 25.07.2002 DE 10234561
(43) Veröffentlichungstag der Anmeldung: 28.01.2004
(73) Patentinhaber: Eichenauer Heizelemente GmbH & Co. KG, 76870 Kandel (DE)
(72) Erfinder: Starck, Roland, 76756 Bellheim (DE); Thome, Gerhard, 76709 Kronau (DE)
(74) Vertreter: Twelmeier Mommer & Partner

(56) Entgegenhaltungen:
- FR-A- 2 705 731
- PATENT ABSTRACTS OF JAPAN Bd. 0110, Nr. 44 (M-560), 10. Februar 1987 (1987-02-10) & JP 61 207874 A (TOYOTA MOTOR CORP), 16. September 1986 (1986-09-16)

## Beschreibung

Die Erfindung betrifft ein Verfahren und eine Vorrichtung zur Funktionsprüfung einer elektrischen Heizeinrichtung, welche ein PTC-Heizelement aufweist.

Ein Verfahren mit den im Oberbegriff des Anspruchs 1 angegebenen Merkmalen und eine entsprechende Vorrichtung sind aus der FR-A 2 705 731 bekannt.

Kraftfahrzeuge enthalten eine Reihe von Flüssigkeiten, welche bei entsprechend kalter Witterung einfrieren können, so dass Heizeinrichtungen benötigt werden, um diese Flüssigkeiten ggfls. vor Inbetriebnahme des Kraftfahrzeuges aufzutauen. Insbesondere zum Vorheizen von Dieselkraftstoff haben sich elektrische Heizeinrichtungen mit einem oder mehreren PTC-Heizelementen, wie sie beispielsweise in der DE 100 31 541 A1 offenbart sind, bewährt. Ein Problem solcher Heizeinrichtungen ist jedoch, dass eine Reduzierung der Heizleistung beispielsweise durch Alterung oder durch Abrieb zwischen Kontaktelementen und dem PTC-Heizelement. nicht auszuschließen ist. Unterschreitet das Heizelement eine erforderliche minimale Heizleistung, so ist eine ausreichende Vorheizung des Dieselkraftstoffes nicht mehr gewährleistet und die Heizeinrichtung bzw. das Heizelement muss ausgetauscht werden. Eine solche Fehlfunktion der Heizeinrichtung wird jedoch erst im Bedarfsfall festgestellt, so dass das Fahrzeug dann aufgrund der Fehlfunktion fahruntüchtig ist.

Aufgabe der Erfindung ist es daher, einen Weg aufzuzeigen, wie zuverlässig und kostengünstig die Funktionsfähigkeit einer elektrischen Heizeinrichtung zum Beheizen von Flüssigkeit in einem Kfz überprüft werden kann.

Diese Aufgabe wird durch ein Verfahren mit den in Anspruch 1 angegebenen Merkmalen gelöst. Vorteilhafte Weiterbildungen der Erfindung sind Gegenstand der Unteransprüche.

Ein erfindungsgemäßes Verfahren macht sich in genialer Weise die Besonderheiten der Widerstandstemperaturcharakteristik eines PTC-Heizelementes zu Nutze. Während elektrische Leiter üblicherweise einen mit der Temperatur T streng monton ansteigenden Widerstandsverlauf aufweisen, besitzt die Widerstands-Temperaturcharakteristik eines PTC-Heizelementes bei einer Temperatur Tₘᵢₙ einen minimalen elektrischen Widerstand Rₘᵢₙ. Unterhalb dieser Temperatur Tₘᵢₙ ist der Temperaturkoeffizient negativ, der elektrische Widerstand R nimmt also mit steigender Temperatur ab, zwischen Tₘᵢₙ und der maximalen Betriebstemperatur hingegen ist der Temperaturkoeffizient positiv, der elektrische Widerstand R nimmt also mit steigender Temperatur zu. Der Arbeitsbereich eines PTC-Heizelementes liegt oberhalb von Tₘᵢₙ, so dass das PTC-Heizelement durch den sehr steilen Anstieg des elektrischen Widerstandes bei höheren Temperaturen vor einer Überhitzung geschützt ist.

Beim Einschalten des PTC-Heizelementes weist dieses eine Temperatur unterhalb von Tₘᵢₙ auf, so dass aufgrund des speziellen Verlaufs der WiderstandsTemperaturcharakteristik des PTC-Heizelementes der elektrische Widerstand des PTC-Heizelementes zunächst abnimmt.

Der elektrische Widerstand des PTC-Heizelementes wird bei Erreichen der Temperatur Tₘᵢₙ minimal und steigt anschließend stark an. Dies bedeutet, dass nach dem Einschalten der Heizeinrichtung die Stärke des durch das PTC-Heizelement fließenden Heizstromes zunächst zunimmt, ein Maximum erreicht und anschließend wieder abnimmt. Indem nun nach dem Einschalten der Heizeinrichtung während einer Zeitspanne Δt, welche bevorzugt so bemessen ist, dass sie bei einwandfrei funktionierender Heizeinrichtung zu einer Erwärmung des PTC-Heizelementes über die Temperatur Tₘᵢₙ hinaus ausreicht, die Stärke des Heizstromes l erfasst wird, kann durch Vergleich der Stärke des Heizstromes mit einem vorgegebenen Schwellenwert |_{Grenz} zuverlässig festgestellt werden, ob die Heizeinrichtung funktionstüchtig ist. Der Schwellenwert |_{Grenz} wird dabei so gewählt, dass er vom Heizstrom einer Heizeinrichtung, welche gerade noch die geforderte Heizleistung erbringt, bei der Temperatur Tₘᵢₙ des PTC-Heizelementes erreicht wird. Eine Reduzierung der Kontaktflächen durch Abrieb zwischen Kontaktelementen und dem PTC-Heizelement führt stets zu einer Erhöhung des elektrischen Gesamtwiderstandes, was sich insbesondere auch bei der Temperatur Tₘᵢₙ in einem höheren elektrischen Gesamtwiderstand der Heizeinrichtung und damit einer geringeren Stärke des Heizstromes, insbesondere auch des maximalen Heizstromes bei der Temperatur Tₘᵢₙ, bemerkbar macht, so dass bei einer schadhaften Heizeinrichtung der Schwellenwert |_{Grenz} nicht überschritten werden kann.

Bei Einschalten einer elektrischen Heizeinrichtung erreicht das PTC-Heizelement typischerweise bereits innerhalb weniger Sekunden seine Arbeitstemperatur, auch wenn für ein ggfls. erforderliches Erwärmen der zu beheizenden Flüssigkeit unter Umständen mehrere Minuten benötigt werden. Da das oder die PTC-Heizelemte bereits innerhalb weniger Sekunden ihre Arbeitstemperatur erreichen, also über die Temperatur Tₘᵢₙ hinaus aufgeheizt werden, lässt sich das erfindungsgemäße Verfahren vorteilhaft in kurzer Zeit durchführen.

Dadurch, dass der Schwellenwert |_{Grenz} im Hinblick auf den elektrischen Widerstand des PTC-Heizelementes bei der Temperatur Tₘᵢₙ festgelegt wird, funktioniert das erfindungsgemäße Verfahren im tiefsten Winter ebenso wie im heißen Sommer. Ob das PTC-Heizelement zu Beginn des Verfahrens eine Temperatur von minus 40° C oder plus 40° C hat, spielt keine Rolle. Stets lässt sich das PTC-Heizelement in der Zeitspanne Δt über die Temperatur Tₘᵢₙ hinaus aufheizen. Während an sich für eine umfassende Diagnose einer Heizeinrichtung nach dem Stand der Technik die Kraftstofftemperatur, der Kraftstoffdurchfluss, die Betriebsspannung und der Strom durch das Heizelement erfasst werden und die Messwerte über AD-Wandler einem Controller zugeführt werden müssen, der dann anhand eines hinterlegten Kennlinienfeldes entscheidet, ob eine Fehlfunktion vorliegt, genügt es hier vielmehr, wiederholt oder kontinuierlich den Strom zu messen, was nur geringen Aufwand verursacht, so dass das erfindungsgemäße Verfahren kostengünstig ist. Bereits aus dem Anstieg des Heizstromes über den Schwellenwert |_{Grenz} hinaus lässt sich zuverlässig der Schluss ziehen, dass die Heizeinrichtung funktionstüchtig ist.

Wie dem erfindungsgemäßen Verfahren der durch des PTC-Heizelement fließende Heizstrom erfasst wird, spielt keine Rolle, da es nur auf den elektrischen Widerstand des PTC-Heizelementes ankommt, für den der Heizstrom eine messbare Größe darstellt. Es kann beispielsweise ein Strommessgerät mit dem PTC-Heizelement in Reihe geschaltet werden oder auch der Strom durch einen dem PTC-Heizelement parallel geschalteten Vergleichwiderstand bestimmt werden, so dass nur indirekt der Strom durch das PTC-Heizelement ermittelt wird. Prinzipiell ist auch eine Bestimmung des Heizstromes mittels einer Hall-Sonde oder ähnlicher Methoden möglich.

Vorteilhaft an dem erfindungsgemäßen Verfahren ist auch, dass es in Form einer Diagnoseroutine in eine Steuerungsroutine für die Heizeinrichtung eingebunden werden kann. Eine solche Steuerungsroutine dient dazu, im laufenden Betrieb die Temperatur der evtl. zu beheizenden Flüssigkeit sowie die Betriebsspannung zu kontrollieren und im Bedarfsfall die Heizeinrichtung ein- oder auszuschalten. Zum Schalten der Heizung eignet sich insbesondere ein Leistungstransistor, dessen Funktionsfähigkeit sich ebenfalls durch die Steuerungsroutine überwachen lässt. Das Verfahren kann nun einerseits so durchgeführt werden, dass unter den fortlaufend erfassten Werten des Heizstromes durch Vergleich zunächst ein Maximalwert |ₘₐₓ ermittelt wird und lediglich der Maximalwert |ₘₐₓ mit dem Schwellenwert |_{Grenz} verglichen wird. Beispielsweise kann der Heizstrom in festgesetzten Zeitabständen Δt₁, welche klein gegen Δt sind, gemessen werden, der zuerst gemessene Wert |₁ des Heizstromes l in einem Speicher abgespeichert werden, wobei der sich im Speicher befindliche Messwert jeweils dann von einem später gemessenen Wert |ₙ des Heizstromes l überschrieben wird, wenn der Wert |ₙ größer als der im Speicher gespeicherte Wert ist. Nach Ablauf der Zeitspanne Δt enthält der Speicher dann den Maximalwert |ₘₐₓ welcher dann mit dem Schwellenwert |_{Grenz} verglichen werden kann. Eine andere Möglichkeit ist es, den jeweils erfassten Wert des Heizstromes l mit dem Schwellenwert |_{Grenz} zu vergleichen. Diese Alternative ist bevorzugt, da hier auf einen beschreibbaren Speicher verzichtet werden kann. Der Schwellenwert |_{Grenz} bleibt stets gleich, so dass sich vorteilhaft die Stärke des Heizstromes über dem Komperatoreingang eines Controllers kontinuierlich erfassen und gleichzeitig mit dem Schwellenwert |_{Grenz} vergleichen lässt. Ein Vorteil dieser Alternative liegt auch darin, dass die Heizung sofort abgeschaltet werden kann, wenn festgestellt wird, dass ein erfasster Wert des Heizstromes größer als der Schwellenwert |_{Grenz} ist. Es braucht bei dieser Alternative also nicht stets die gesamte Zeitspanne Δt abgewartet werden, so dass sich vorteilhaft das Verfahren abkürzen und die Belastung der Fahrzeugbatterie reduzieren lässt. Bevorzugt ist es insbesondere, die Stärke des Heizstromes kontinuierlich zu erfassen und mit dem Schwellenwert |_{Grenz} laufend zu vergleichen.

Bevorzugt wird bei dem erfindungsgemäßen Verfahren auch die Spannung U, mit welcher die Heizung versorgt wird, erfasst und mit einem vorgegebenen Schwellenwert Uₘᵢₙ verglichen, wobei bei einem Unterschreiten des Schwellenwertes Uₘᵢₙ das Verfahren wiederholt wird. Es kann nämlich durchaus vorkommen, dass die Fahrzeugbatterie, welche die Heizeinrichtung versorgt, während der Zeitspanne Δt zufällig durch einen anderen Verbraucher im Fahrzeug so stark belastet ist, dass die Spannung unter den Schwellenwert Uₘᵢₙ absinkt. Bei einer geringeren Versorgungsspannung wird dann zwangsläufig nur ein geringerer Wert des Heizstromes l erreicht, ohne dass dies auf einen Defekt der Heizeinrichtung schließen lässt. Bevorzugt wird deshalb das Verfahren wiederholt, sobald festgestellt wird dass der vorgegebenen Schwellenwert Uₘᵢₙ der Versorgungsspannung unterschritten wird. Vor einer Wiederholung des beschriebenen Verfahrens sollte die Heizeinrichtung für einige Zeit abgeschaltet bleiben, so dass sich das evtl. bereits über die Temperatur Tₘᵢₙ hinaus aufgeheizte PTC-Heizelement wieder unter die Temperatur Tₘᵢₙ abkühlen kann und die Versorgungsspannung Zeit hat, sich wieder zu stabilisieren.

Bevorzugt wird das erfindungsgemäße Verfahren durch ein vom Starten des Fahrzeuges oder dem Entriegeln des Fahrzeuges abgeleitetes Signal in Gang gesetzt. Auf diese Art und Weise kann die Funktionsfähigkeit der elektrischen Heizeinrichtung bei jedem Fahrtantritt aufs neue überprüft werden, so dass ein etwaiger Defekt frühzeitig festgestellt werden kann.

Weitere Einzelheiten und Vorteile der Erfindung werden anhand eines Ausführungsbeispiels unter Bezugnahme auf die beigefügten Zeichnungen erläutert. Es zeigen:
- Figur 1: die Widerstands-Temperaturcharakteristik eines PTC-Heizelementes,
- Figur 2a: ein Flussdiagramm des beschriebenen Verfahrens zur Funktionsprüfung einer elektrischen Heizeinrichtung,
- Figur 2b: ein Flussdiagramm eines Verfahrens zur Steuerung einer elektrischen Heizeinrichtung,
- Figur 3: eine Skizze des Ausführungsbeispiels einer elektrischen Schaltung zur Umsetzung des beschriebenen Verfahrens und
- Figur 4: eine Explosionszeichnung eines Ausführungsbeispiels einer elektrischen Heizeinrichtung zum Heizen von Dieselkraftstoff.

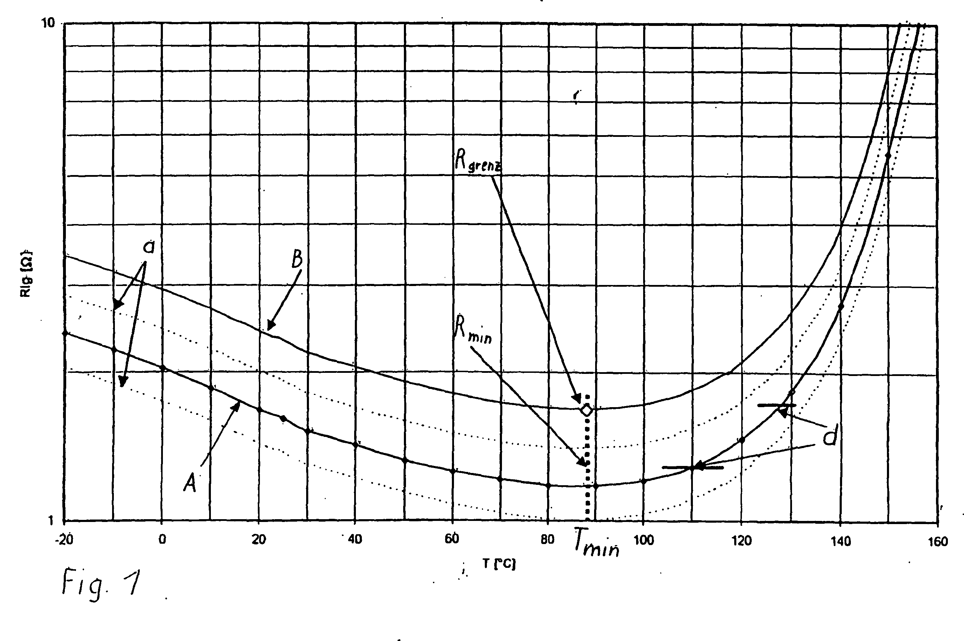

In Figur 1 zeigt die Kurve A in einer logarithmischen Darstellung den Verlauf des elektrischen Gesamtwiderstandes R einer elektrischen Heizeinrichtung mit einem PTC-Heizelement in Abhängigkeit von der Temperatur T. Der Verlauf des Gesamtwiderstandes spiegelt dabei im wesentlichen die Temperaturabhängigkeit des elektrischen Widerstandes eines PTC-Heizelementes, welches bei einer funktionierenden Heizeinrichtung den größten Teil des elektrischen Gesamtwiderstandes ausmacht, wieder. Wie man anhand des Verlaufs der Kurve A erkennt, nimmt der Widerstand eines PTC-Heizelementes ausgehend von Temperaturen unter dem Gefrierpunkt mit ansteigender Temperatur zunächst ab, erreicht schließlich bei der Temperatur Tₘᵢₙ ein Minimum und steigt von dort aus mit weiter zunehmender Temperatur stark an. Der Arbeitsbereich eines PTC-Heizelementes liegt oberhalb der Temperatur Tₘᵢₙ in dem mit dem Buchstaben d angedeuteten Bereich. Der elektrische Gesamtwiderstand von neuen elektrischen Heizeinrichtungen unterliegt fertigungsbedingt einer gewissen Streuung, welche sich innerhalb eines Toleranzbandes a bewegt, das durch gestrichelte Linien angedeutet ist.

Der Gesamtwiderstand einer elektrischen Heizeinrichtung kann nun beispielsweise durch schadhafte Kontaktstellen oder eine Alterung des oder der PTC-Heizelemente im Lauf der Zeit zunehmen. Dies führt zu einer senkrechten Verschiebung der Kurve A nach oben. Die Kurve B gibt als eine Grenzkurve den Temperaturverlauf des Gesamtwiderstandes einer elektrischen Heizeinrichtung wieder, welche gerade noch die für eine Funktionsfähigkeit erforderliche Mindestheizleistung zu erbringen vermag. Der minimale elektrische Widerstand R_{Grenz} dieser Grenzkurve B, welcher bei der Temperatur Tₘᵢₙ erreicht wird, legt also bei einer vorgegebenen Versorgungsspannung U einen Schwellenwert |_{Grenz} fest, welcher vom Heizstrom bei einer funktionierenden Heizeinrichtung erreicht oder überschritten werden muss. Der elektrische Gesamtwiderstand einer einwandfrei funktionierenden Heizeinrichtung liegt also stets unterhalb der Grenzkurve B, insbesondere bei der Temperatur Tₘᵢₙ unter dem Schwellenwert |_{Grenz}.

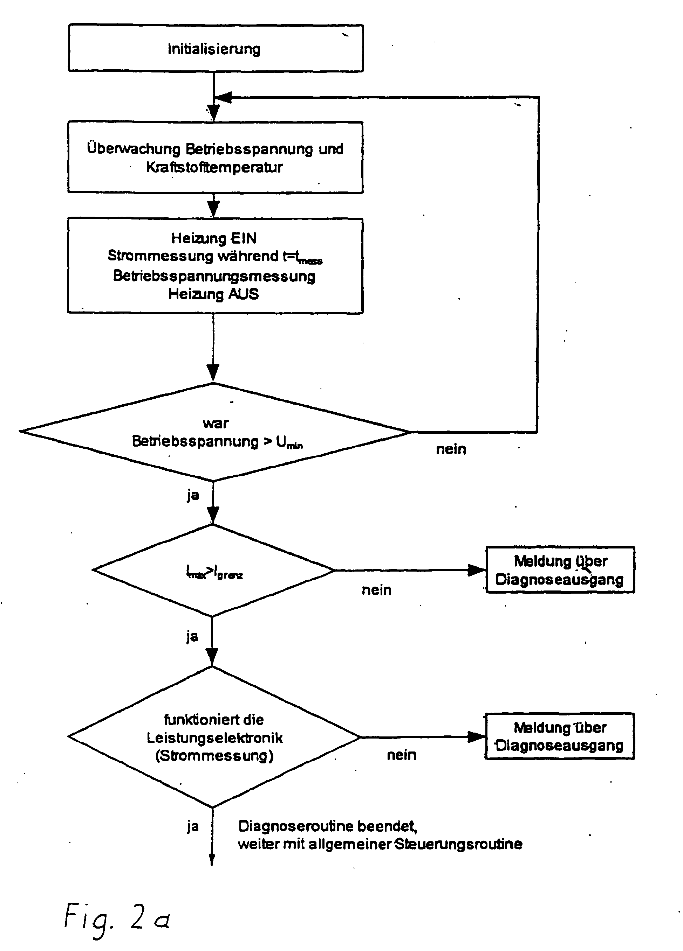

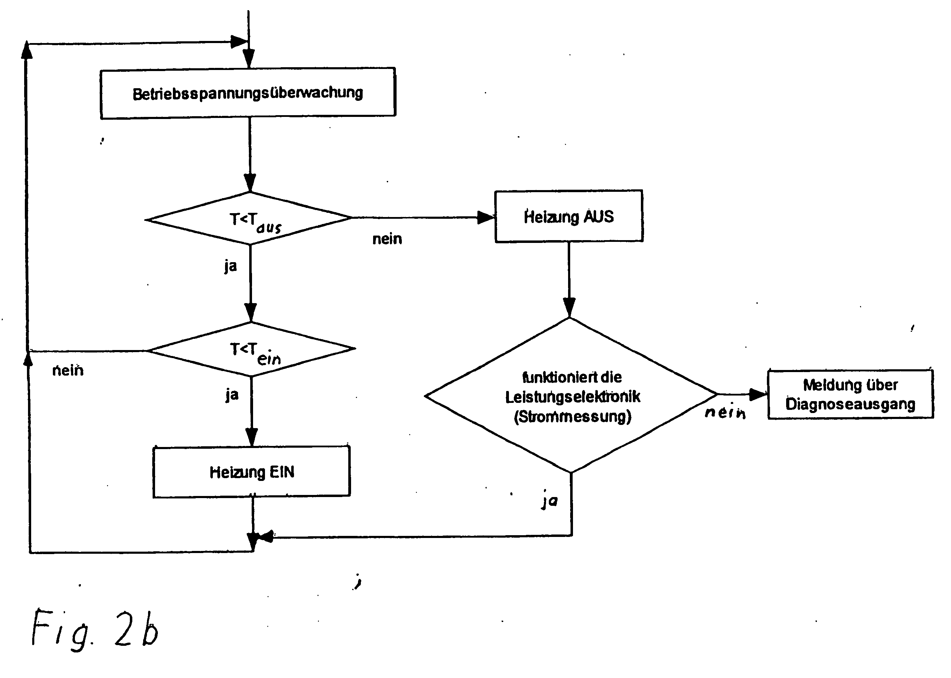

Figur 2a zeigt beispielhaft ein Flussdiagramm des beschriebenen Verfahrens zur Funktionsprüfung einer elektrischen Heizeinrichtung, welches sich die Besonderheiten der vorstehend erläuterten Widerstands-Temperaturcharakteristik eines PTC-Heizelementes zu Nutze macht, und in ein in Figur 2b gezeigtes Steuerungsverfahren integriert ist. Bei dem in Figur 2a und 2b gezeigen Ausführungsbeispiel ist das Verfahren zur Funktionsprüfung der elektrischen Heizeinrichtung als Diagnoseroutine (Figur 2a) in ein Verfahren zum Betreiben der Heizeinrichtung, also zum Regeln der Temperatur der zu beheizenden Flüssigkeit (Figur 2b), integriert. Das Verfahren wird beispielsweise durch das Starten des Motors ausgelöst. Bei dem gezeigten Ausführungsbeispiel erfolgt zunächst eine Überwachung der Betriebsspannung und der Kraftstofftemperatur, um zu gewährleisten, dass die Messung erst nach einer Stabilisierung der Werte vorgenommen wird und die Werte sich im für die Messung zulässigen Bereich befinden (U > Uₘᵢₙ,T < Tₘᵢₙ). Anschließend wird die Heizeinrichtung für eine Zeitspanne Δt eingeschaltet. In dieser Zeitspanne Δt, welche bei funktionierender Heizeinrichtung zu einer Erwärmung des PTC-Heizelementes über die Temperatur Tₘᵢₙ hinaus ausreicht, werden fortlaufend der Heizstrom | sowie die Betriebsspannung U gemessen. Nach Ablauf der Zeitspanne Δt, welche typsicherweise einige Sekunden beträgt, wird die Heizeinrichtung ausgeschaltet. Daran anschließend wird zunächst überprüft, ob die Betriebsspannung während der gesamten Zeit Δt einen vorgegebenen Mindestwert Uₘᵢₙ überschritten hat. War dies nicht der Fall, so kann über die Funktionsfähigkeit der Heizeinrichtung keine Aussage getroffen werden und der vorstehend beschriebene Verfahrensschritt muss wiederholt werden. Hatte die Betriebsspannung den Mindestwert Uₘᵢₙ überschritten, so wird anschließend überprüft, ob der maximale Heizstrom |ₘₐₓ, welcher bei der Temperatur Tₘᵢₙ erreicht wird einen vorgegebenen Grenzwert |_{Grenz} überschreitet. Ist dies nicht der Fall, so ist die Heizeinrichtung defekt. Dies wird an den Fahrer des Kraftfahrzeugs gemeldet.

Zusätzlich wird anschließend überprüft, ob die zur Strommessung verwendete Leistungselektronik funktioniert. Falls dies nicht der Fall ist, wird dies ebenfalls über den Diagnosausgang gemeldet. Mit diesem Schritt ist das Verfahren zur Funktionsprüfung beendet. An die Diagnoseroutine nach Figur 2a schließt sich sodann die allgemeine Steuerungsroutine nach Figur 2b an, welche nachfolgend ebenfalls kurz erläutert wird.

Mittels eines Temperatursensors wird die Temperatur der zu beheizenden Flüssigkeit, beispielsweise Dieselkraftstoff, erfasst. Ist die gemessene Temperatur des Dieselkraftstoffs kleiner als eine untere Schwellentemperatur, welche in Figur 2 mit Tₑᵢₙ bezeichnet ist, so wird die Heizung eingeschaltet. Ist die gemessene Temperatur des Dieselkraftstoffs größer als eine darüberliegende obere Schwellentemperatur Tₐᵤₛ, so wird die Heizung ausgeschaltet. Darüberhinaus wird weiterhin die Betriebsspannung und die Funktion der Leistungselektronik sowie das Vorhandensein von Masse und eines von der Zündung des Motors abgeleiteten Signals D+ überwacht und gegebenenfalls ein digitaler Fehlercode erzeugt.

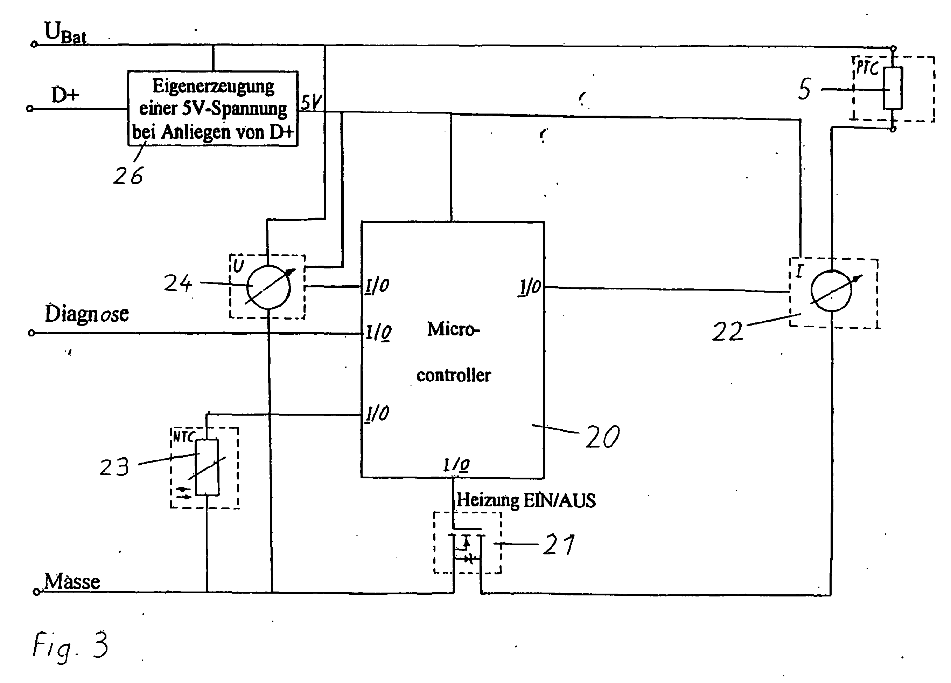

Figur 3 zeigt eine schematische Schaltungsskizze einer Prüf- und Steuerschaltung zum Umsetzen des beschriebenen Verfahrens. Die gezeigte Schaltung verfügt über ein PTC-Heizelement 5, welches von der Fahrzeugbatterie mit einer Betriebspannung Ua versorgt wird. Ein Microcontroller 20 (beispielsweise ein ST 725 11 von ST Microtroelectronics) schaltet die Heizeinrichtung über eine Massedurchschaltung mit Vorpolschutz 21, welche einen Leistungstransistor enthält, ein und aus. In dem Heizstromkreis ist ein Strommessgerät bzw. eine Strommessschaltung 22 vorgesehen, welches seine Messsignale dem Microcontroller 20 zuleitet. Der Microcontroller 20 vergleicht fortlaufend die Messwerte des Heizstromes mit dem vorgegebenen Wert I_{Grenz}. Der Wert |_{Grenz} kann beispeilsweise in einem Speicher des Microcontrollers 20 vorhanden sein oder auch bereits im Strommessgerät 22 durch eine Vergleichsschaltung berücksichtigt werden, so dass dem Microcontroller 20 gegebenenfalls bereits das Überschreiten des Wertes |_{Grenz} gemeldet werden kann. Wird dieser Wert |_{Grenz} während der vorgegebenen Zeitspanne Δt nicht erreicht, so wird dies über einen Diagnoseausgang 30 gemeldet. Zur Messung des Heizstromes eignet sich als Strommessgerät 22 beispielsweise ein Mosfet, welcher an einem seiner Ausgänge ein Signal zur Verfügung stellt, das ein Maß für den durch den Mosfet fließenden Strom ist. Ein socher Mosfet mit einem Stromsensausgang ist beispielsweise der VN610 von ST Microelektronics.

Zum Überwachen der Betriebsspannung U_{Bat} ist ein Spannungsmessgerät 24 bzw. eine Spannungsmessschaltung vorgesehen, welche dem Microcontroller 20 ihre Messwerte zur Verfügung stellt. Auf diese Art und Weise kann der Microcontroller 20 die im Zusammenhang mit Figur 2 beschriebene Diagnoseroutine wiederholen, falls die Versorgungsspannung einen vorgegebenen Schwellenwert U ₘᵢₙ unterschritten hat.

Der Microcontroller 20 ist ferner mit einem Temperatursensor 23, beispielsweise einem NTC, verbunden, welcher die Temperatur der zu beheizenden Flüssigkeit, beispielsweise Dieselkraftstoff, erfasst.

Der Microcontroller 20 sowie die Messgeräte bzw. Messschaltungen 22 und 24 werden von einer stabilisierten Eigenspannungserzeugung 26 bei Anliegen eines von der Zündung des Motors abgeleiteten Signals D+ mit einer Spannung von 5 Volt versorgt.

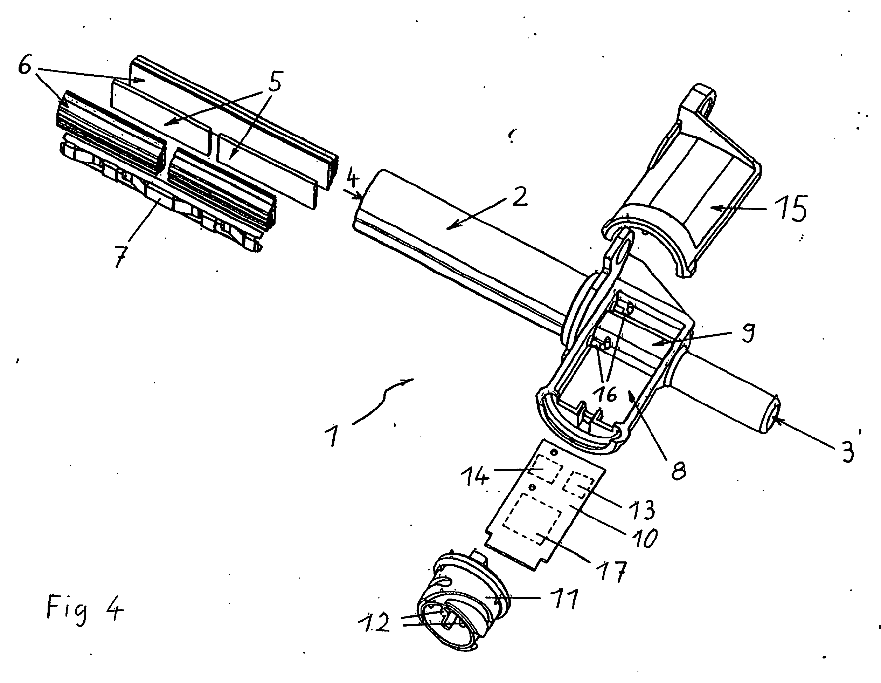

Figur 4 zeigt ein Ausführungsbeispiel einer Heinzeinrichtung 1 zum Beheizen von Dieselkraftstoff in der Kraftstoffzuführung eines Verbrennungsmotors. Ein Kunststoffgehäuse 2 zeigt eine Einlassöffnung 3 und eine Auslassöffnung 4 eines Durchflusskanals. Zwischen der Einlassöffnung 3 und der Auslassöffnung 4 wird der Kraftstoff im Inneren einer Röhre in Längsrichtung ohne Richtungsänderung geführt, d.h. das Kunststoffgehäuse 2 wird vom Kraftstoff längs durchströmt. Im ausgangsseitigen Teil des Gehäuses 2 ist die Röhre erweitert. In diesem erweiterten Röhrenteil sind PTC-Heizelemente 5 zwischen Kontaktelementen 6 mit Rippen aus einem gut wärmeleitenden Material angeordnet, die mit Hilfe einer Federschiene 7 in die Röhre gehalten sind. Ferner weist das Gehäuse 2 zusammen mit einem passenden Deckel 15 im mittleren Teil einen seitlich herausführenden Hohlraum 8 auf, welcher sich quer zur kraftstoffführenden Röhre erstreckt. Die Kraftstoff führende Röhre ragt dabei mit ihrer Außenseite 9 über die gesamte Länge des Hohlraumes 8 etwa zur Hälfte in diesen hinein. Wärmeleitend verbunden mit dieser oben abgeflachten Außenseite der Röhre 9 ist eine Platine 10 für die Prüf- und Steuerungselektronik in dem Hohlraum 8 angeordnet. Anschlüsse 16 stellen elektrische Verbindungen zwischen Platine 10 und Kontaktelementen 6 her. Die Vorderseite des Hohlraumes 8 ist mit einem Stecker 11 für einen Bajonettverschluss versehen, durch den die Stromversorgungs- und Diagnoseanschlüsse 12 zu einer übergeordneten Überwachungseinrichtung nach außen geführt werden. Vorteilhaft ist auf diese Art und Weise der Verdrahtungsaufwand erheblich reduziert. Insbesondere erlaubt die sich quer zur Röhre, d.h. dem Durchflusskanal für den Dieselkraftstoff, erstreckende Platine 10 einen außerordentlich kompakten Aufbau der Heizeinrichtung 1. Vorteilhaft lässt sich im Falle eines Defektes die Platine 10 mit der Prüf- und Steuerungselektronik oder das Gehäuse 2 mit der Höhe und den PTC-Heizelementen leicht austauschen. Die Steckverbindung zwischem dem Gehäuse 2 mit der Platine 10, an welcher der Stecker 11 angebracht ist, gewährleistet ein einfaches Zusammenfügen.

Falsche Verbindungen sind dabei durch die Geometrie der Anschlüsse 16 ausgeschlossen.

Auf der Platine 10 direkt über der abgeflachten Außenseite der Kraftstoff führenden Röhre 9 ist in wärmeleitendem Kontakt mit dieser im in Strömungsrichtung vorderen Teil ein Temperatursensor 13 zum Messen der Kraftstofftemperatur angeordnet. Über den in Strömungsrichtung gelegenen hinteren Teil der abgeflachten Außenseite der Röhre 9 ist die Leistungselektronik mit einem Leistungstransistor 14 mit ihrer Wärmeabgabeeinrichtung auf der Platine 10 wärmeleitend auf der Röhre 9 verbunden angeordnet. Die Platine 10 weist unter dem Leistungstransistor 14 metallgefüllte Löcher, beispielsweise mit Lötzinn gefüllte Bohrungen, auf. Auf diese Art und Weise wird die Abwärme des Leistungstransistors 14 besser durch die Platine 10 hindurch zur Außenseite der Röhre 9 transportiert. Dadurch kann die Abwärme der Leistungselektronik noch besser an den Kraftstoff abgegeben werden, wodurch sich eine eigene Kühleinrichtung einsparen lässt und die Abwärme zur Kraftstoffvorheizung mitbenutzt werden kann. Um die Abfuhr der Abwärme noch weiter zu verbessern, kann man im Deckel 15 Lüftungsschlitze vorsehen. Durch die Anordnung der Leistungselektronik mit dem Leistungstransistor 14 über dem abströmenden Teil der Röhre 9 wird vorteilhaft der Temperatursensor 13 durch die Abwärme allenfalls geringfügig beeinflusst.

## Patentansprüche

1. Verfahren zur Funktionsprüfung einer elektrischen Heizeinrichtung (1), welche ein PTC-Heizelement (5) aufweist, insbesondere zum Beheizen von Flüssigkeiten in einem Kfz, mit den folgenden Schritten:
- Einschaltung der Heizeinrichtung (1),
- Erfassen der Stärke des durch das PTC-Heizelement (5) fließenden Heizstromes I während einer Zeitspanne Δt,
- feststellen, ob während der Zeitspanne Δt die Stärke des Heizstromes I einen vorgegebenen Schwellenwert I_{Grenz} überschreitet oder zumindest erreicht,
- signalisieren eines Defektes, falls während der Zeitspanne Δt die Stärke des Heizstromes I den Schwellenwert I_{Grenz} nicht überschritten oder zumindest erreicht hat,
**dadurch gekennzeichnet, dass** der Schwellenwert I_{Grenz} so gewählt ist, dass er vom Heizstrom einer Heizeinrichtung, welche gerade noch die geforderte Heizleistung erbringt, bei einer Temperatur Tₘᵢₙ des PTC-Heizelementes (5) erreicht wird, und dass die Zeitspanne Δt auf das Einschalten der Heizeinrichtung (1) folgt und zu einer Erwärmung des PTC-Heizelementes (5) auf die Temperatur Tₘᵢₙ ausreicht, bei welcher die Widerstands-Temperaturcharakteristik des PTC-Heizelements (5) ein Minimum aufweist, wenn die Heizeinrichtung (1) über einen elektrischen Gesamtwiderstand verfügt, welcher bei der Temperatur Tₘᵢₙ einen vorgegebenen Höchstwert nicht überschreitet.

2. Verfahren nach Anspruch 1, **dadurch gekennzeichnet, dass** die Stärke des Heizstromes I während der Zeitspanne Δt kontinuierlich erfasst wird.

3. Verfahren nach Anspruch 1, **dadurch gekennzeichnet, dass** die Stärke des Heizstromes I während der Zeitspanne Δt wiederholt gemessen wird.

4. Verfahren nach einem der vorstehenden Ansprüche, **dadurch gekennzeichnet, dass** die erfassten Werte des Heizstromes I jeweils mit dem Schwellenwert I_{Grenz} verglichen werden.

5. Verfahren nach Anspruch 4, **dadurch gekennzeichnet, dass** die Heizeinrichtung (1) ausgeschaltet und das Verfahren beendet wird, sobald festgestellt wurde, dass der Heizstrom I den Schwellenwert I_{Grenz} überschritten hat.

6. Verfahren nach einem der Ansprüche 1 bis 3, **dadurch gekennzeichnet, dass** unter den erfassten Werten des Heizstromes I durch Vergleich ein Maximalwert Iₘₐₓ ermittelt wird und der Maximalwert Iₘₐₓ mit dem Schwellenwert I_{Grenz} verglichen wird.

7. Verfahren nach einem der vorstehenden Ansprüche, **dadurch gekennzeichnet, dass** die Heizeinrichtung (1) nach Ablauf der Zeitspanne Δt abgeschaltet wird.

8. Verfahren nach einem der vorstehenden Ansprüche, **dadurch gekennzeichnet, dass** zum Ein- und Ausschalten der Heizeinrichtung (1) ein Leistungstransistor (14) verwendet wird.

9. Verfahren nach Anspruch 8, **dadurch gekennzeichnet, dass** der Leistungstransistor durch eine Strommessung auf seine Funktionsfähigkeit überprüft wird.

10. Verfahren nach einem der vorstehenden Ansprüche, **dadurch gekennzeichnet, dass** die Stärke des Heizstromes I über einen Komparatoreingang eines Controllers (20) erfasst wird.

11. Verfahren nach einem der vorstehenden Ansprüche, **dadurch gekennzeichnet, dass** eine Spannung U, mit welcher die Heizeinrichtung (1) versorgt wird, erfasst und mit einem vorgegebenen Schwellenwert Uₘᵢₙ verglichen wird, wobei bei einem Unterschreiten des Schwellenwertes Uₘᵢₙ das Verfahren wiederholt wird.

12. Verfahren nach Anspruch 11, **dadurch gekennzeichnet, dass** die Spannung U durch einen Komperatoreingang eines Controllers (20) erfasst wird.

13. Verfahren nach einem der vorstehenden Ansprüche, **dadurch gekennzeichnet, dass** das Verfahren durch ein vom Starten des Fahrzeugs oder dem Entriegeln des Fahrzeugs abgeleitetes Signal in Gang gesetzt wird.

14. Verfahren nach Anspruch 13, **dadurch gekennzeichnet, dass** das Verfahren jedesmal, wenn das Fahrzeug gestartet wird, in Gang gebracht wird.

15. Verfahren nach einem der vorstehenden Ansprüche, **dadurch gekennzeichnet, dass** ein Signal über einen Defekt durch einen I/O-Ausgang des Controllers (20) ausgegeben wird.

16. Verfahren nach Anspruch 15, **dadurch gekennzeichnet, dass** das Signal als digitaler Fehlercode an einem I/O-Ausgang des Controllers (20) ausgegeben wird.

17. Elektrische Heizeinrichtung, Insbesondere zum Beheizen einer Flüssigkeit in einem Kraftfahrzeug, mit einem PTC-Heizelement (5) und einer Prüf- und Steuerungselektronik, welche über eine Strommessschaltung (22) verfügt, zum Prüfen der Funktionsfähigkeit der Heizeinrichtung (1) und Steuern derselben, **dadurch gekennzeichnet, dass** die Prüf- und Steuerungselektronik ein Verfahren nach einem der Ansprüche 1 bis 16 durchführt.

18. Heizeinrichtung nach Anspruch 17, **dadurch gekennzeichnet, dass** die Prüf- und Steuerungselektronik in einem Gehäuse (2, 15) angeordnet ist, welches eine an einem Durchflusskanal (2, 3) der zu beheizenden Flüssigkeit anliegende Wand (9) aufweist, wobei ein wesentlicher Wärmeerzeuger (14) der Prüf- und Steuerungselektronik wärmeleitend an diese Wand (9) angekoppelt ist.

19. Heizeinrichtung nach Anspruch 17 oder 18, **dadurch gekennzeichnet, dass** ein Leistungstransistor (14) zum Ein- und Ausschalten der Heizeinrichtung vorgesehen ist, welcher wärmeleitend an die Wand (9) angekoppelt ist.

20. Heizeinrichtung nach Anspruch 18 oder 19, **dadurch gekennzeichnet, dass** die an den Durchflusskanal (2, 3) der zu beheizenden Flüssigkeit anliegende Wand (9) abgeflacht ist.

21. Heizeinrichtung nach einem der Ansprüche 17 bis 20, **dadurch gekennzeichnet, dass** ein Temperatursensor (13) zum Erfassen der Temperatur der zu beheizenden Flüssigkeit, insbesondere Dieselkraftstoff vorgesehen ist, wobei der Temperatursensor (13) und der Leistungstransistor (14) wärmeleitend an die Wand (9) angekoppelt sind und der Temperatursensor (13) hinsichtlich der Strömungsrichtung der zu beheizenden Flüssigkeit stromaufwärts des Leistungstransistors (14) angeordnet ist.

22. Heizeinrichtung nach einem der Ansprüche 17 bis 21, **dadurch gekennzeichnet, dass** die Prüf- und Steuerungselektronik auf einer Platine (10) angeordnet ist, welche auswechselbar in das Gehäuse (2, 15) eingesetzt ist.

23. Heizeinrichtung nach einem der Ansprüche 17 bis 22, **dadurch gekennzeichnet, dass** an der Platine (10) ein Stecker (11) mit Stromversorgungs- und Diagnoseanschlüssen (12) angebracht ist und zusammen mit der Platine (10) in das Gehäuse (2, 15) gesteckt ist.

24. Heizeinrichtung nach Anspruch 23, **dadurch gekennzeichnet, dass** sich die Platine (10) mit dem Stecker (11) quer zum Durchflusskanal (2, 3) erstreckt.

25. Heizeinrichtung nach einem der Ansprüche 22 bis 24, **dadurch gekennzeichnet, dass** die Platine (10) unter dem wesentlichen Wärmeerzeuger (14) mit Metall gefüllte Löcher aufweist.

## Claims

1. A method for testing the function of an electric heating device (1), which comprises a PTC heating element (5), in particular for heating liquids in a motor vehicle, comprising the following steps:
- turning on the heating device (1),
- detecting the intensity of the heating current I flowing through the PTC heating element (5) during a period of time Δt,
- determining whether the intensity of the heating current I exceeds or at least reaches a predetermined threshold value Iₜₕᵣₑₛₕ during the period of time Δt,
- signalizing a defect in the event that the intensity of the heating current I has not exceeded or at least reached the threshold value Iₜₕᵣₑₛₕ during the period of time Δt,
**characterized in that** the threshold value Iₜₕᵣₑₛₕ is chosen such that it is reached at a temperature Tₘᵢₙ of the PTC heating element (5) by the heating current of a heating device, which narrowly generates the required heating power, and **in that** the period of time Δt follows the turn-on procedure of the heating device (1) and is sufficient to heat the PTC heating element (5) to the temperature Tₘᵢₙ, at which the resistance temperature characteristic of the PTC heating element (5) shows a minimum when the heating device (1) has a total electric resistance, which does not exceed a predetermined maximum value in response to the temperature Tₘᵢₙ.

2. A method according to claim 1, **characterized in that** the intensity of the heating current I is detected continuously during the period of time Δt.

3. A method according to claim 1, **characterized in that** the intensity of the heating current I is measured repeatedly during the period of time Δt.

4. A method according to any one of the preceding claims, **characterized in that** the detected values of the heating current I are in each case compared to the threshold value Iₜₕᵣₑₛₕ.

5. A method according to claim 4, **characterized in that** the heating device (1) is turned off and the method is ended as soon as it has been determined that the heating current I has exceeded the threshold value Iₜₕᵣₑₛₕ.

6. A method according to any one of claims 1 to 3, **characterized in that** a maximum value Iₘₐₓ is determined among the detected values of the heating current I by means of comparison and **in that** the maximum value Iₘₐₓ is compared to the threshold value Iₜₕᵣₑₛₕ.

7. A method according to any one of the preceding claims, **characterized in that** the heating device (1) is turned off after the period of time Δt has lapsed.

8. A method according to any one of the preceding claims, **characterized in that** a power transistor (14) is used to turn the heating device (1) on and off.

9. A method according to claim 8, **characterized in that** the functional capability of the power transistor is checked by means of a current measurement.

10. A method according to any one of the preceding claims, **characterized in that** the intensity of the heating current I is detected via a comparator input of a controller (20).

11. A method according to any one of the preceding claims, **characterized in that** a voltage U, with which the heating device (1) is supplied, is detected and is compared to a predetermined threshold value Uₘᵢₙ, wherein the method is repeated when the voltage U falls below the threshold value Uₘᵢₙ.

12. A method according to claim 11, **characterized in that** the voltage U is detected by means of a comparator input of a controller (20).

13. A method according to any one of the preceding claims, **characterized in that** the method is launched by means of a signal, which is derived from the start-up of the vehicle or from the unlocking of the vehicle.

14. A method according to claim 13, **characterized in that** the method is actuated each time the vehicle is started.

15. A method according to any one of the preceding claims, **characterized in that** a signal relating to a defect is output via an I/O output of the controller (20).

16. A method according to claim 15, **characterized in that** the signal is output to an I/O output of the controller (20) as a digital error code.

17. An electric heating device, in particular for heating a liquid in a motor vehicle, comprising a PTC heating element (5) and a testing and control electronics, which has a current measuring device (22) for testing the functional capability of the heating device (1) and for controlling it, **characterized in that** the testing and control electronics carries out a method according to any one of claims 1 to 16.

18. A heating device according to claim 17, **characterized in that** the testing and control electronics is arranged in a housing (2, 15), which comprises a wall (9) abutting on a flow passage (2, 3) of the liquid, which is to be heated, wherein a substantial heat generator (14) of the testing and control electronics is coupled to this wall (9) so as to conduct heat.

19. A heating device according to claim 17 or 18, **characterized in that** a power transistor (14) for turning the heating device on and off is provided, which power transistor (14) is coupled to the wall (9) so as to conduct heat.

20. A heating device according to claim 18 or 19, **characterized in that** the wall (9) abutting on the flow passage (2, 3) of the liquid, which is to be heated, is flattened.

21. A heating device according to any one of claims 17 to 20, **characterized in that** provision is made for a temperature sensor (13) for detecting the temperature of the liquid, which is to be heated, in particular of diesel fuel, wherein the temperature sensor (13) and the power transistor (14) are coupled to the wall (9) so as to conduct heat and the temperature sensor (13) is arranged upstream of the power transistor (14) with regard to the flow direction of the fluid, which is to be heated.

22. A heating device according to any one of claims 17 to 21, **characterized in that** the testing and control electronics is arranged on a circuit board (10), which is inserted into the housing (2, 15) so as to be capable of being replaced.

23. A heating device according to any one of claims 17 to 22, **characterized in that** a plug (11) comprising power supply and diagnostic terminals (12) is attached to the circuit board (10) and is inserted into the housing (2, 15) together with the circuit board (10).

24. A heating device according to claim 23, **characterized in that** the circuit board (10) comprising the plug (11) extends transversely to the flow passage (2, 3).

25. A heating device according to any one of claims 22 to 24, **characterized in that** the circuit board (10) comprises holes, which are filled with metal, underneath the substantial heat generator (14).

## Revendications

1. Procédé pour le test du bon fonctionnement d'un appareil de chauffage électrique (1) qui présente un élément de chauffage à coefficient de température positif (CTP) (5), en particulier pour le chauffage de liquides dans un véhicule automobile, comprenant les étapes suivantes consistant à :
- mettre en marche l'appareil de chauffage (1) ;
- enregistrer l'intensité du courant de chauffage I circulant à travers l'élément de chauffage PTC (5) pendant un laps de temps Δt,
- déterminer le fait de savoir si, pendant le laps de temps Δt, l'intensité du courant de chauffage I dépasse ou au moins atteint une valeur seuil Iₛₑᵤᵢₗ prédéfinie ;
- signaler un défaut dans le cas où, pendant le laps de temps Δt, l'intensité du courant de chauffage I n'a pas dépassé ou n'a pas au moins atteint la valeur seuil Iₛₑᵤᵢₗ ;
**caractérisé en ce que** la valeur seuil Iₛₑᵤᵢₗ est sélectionnée de telle sorte qu'elle est atteinte par le courant de chauffage d'un appareil de chauffage, qui fournit juste encore la puissance de chauffage requise, à une température Tₘᵢₙ de l'élément de chauffage CTP (5), et **en ce que** le laps de temps Δt suit la mise en marche de l'appareil de chauffage (1) et suffit pour obtenir un réchauffement de l'élément de chauffage CTP (5) à la température Tₘᵢₙ, température à laquelle la caractéristique de résistance-température de l'élément de chauffage CTP (5) présente un minimum, lorsque l'appareil de chauffage (1) dispose d'une résistance électrique globale qui ne dépasse pas une valeur maximale prédéfinie à la température Tₘᵢₙ.

2. Procédé selon la revendication 1, **caractérisé en ce que** l'intensité du courant de chauffage I est enregistrée en continu pendant le laps de temps Δt.

3. Procédé selon la revendication 1, **caractérisé en ce que** l'intensité du courant de chauffage I est mesurée de manière répétée pendant le laps de temps Δt.

4. Procédé selon l'une quelconque des revendications précédentes, **caractérisé en ce que** les valeurs enregistrées du courant de chauffage I sont respectivement comparées à la valeur seuil Iₛₑᵤᵢₗ.

5. Procédé selon la revendication 4, **caractérisé en ce que** l'appareil de chauffage (1) est mis hors circuit et le procédé s'achève, dès qu'il a été constaté que le courant de chauffage I a dépassé la valeur seuil Iₛₑᵤᵢₗ.

6. Procédé selon l'une quelconque des revendications 1 à 3, **caractérisé en ce que**, parmi les valeurs enregistrées du courant de chauffage I, on détermine par comparaison une valeur maximale Iₘₐₓ et on compare la valeur maximale Iₘₐₓ à la valeur seuil Iₛₑᵤᵢₗ.

7. Procédé selon l'une quelconque des revendications précédentes, **caractérisé en ce que** l'appareil de chauffage (1) est déconnecté au terme du laps de temps Δt.

8. Procédé selon l'une quelconque des revendications précédentes, **caractérisé en ce qu'**on utilise un transistor de puissance (14) pour la mise en marche et la mise à l'arrêt de l'appareil de chauffage (1).

9. Procédé selon la revendication 8, **caractérisé en ce que** le transistor de puissance est testé quant à sa capacité de fonctionnement via une mesure du courant.

10. Procédé selon l'une quelconque des revendications précédentes, **caractérisé en ce que** l'intensité du courant de chauffage I est enregistrée via une entrée de comparateur d'un régulateur (20).

11. Procédé selon l'une quelconque des revendications précédentes, **caractérisé en ce qu'**on enregistre une tension U, avec laquelle est alimenté l'appareil de chauffage (1), et on la compare à une valeur seuil Uₘᵢₙ prédéfinie, le procédé étant répété dans le cas d'un dépassement par le bas de la valeur seuil Uₘᵢₙ.

12. Procédé selon la revendication 11, **caractérisé en ce que** la tension U est enregistrée via une entrée de comparateur d'un régulateur (20).

13. Procédé selon l'une quelconque des revendications précédentes, **caractérisé en ce que** le procédé est mis en oeuvre via un signal qui dérivé du démarrage du véhicule ou du déverrouillage du véhicule.

14. Procédé selon la revendication 13, **caractérisé en ce que** le procédé est mis en oeuvre à chaque fois que le véhicule démarre.

15. Procédé selon l'une quelconque des revendications précédentes, **caractérisé en ce qu'**un signal concernant un défaut est émis via un port entrée/sortie du régulateur (20).

16. Procédé selon la revendication 15, **caractérisé en ce que** le signal est émis sous la forme d'un code d'erreur numérique à un port entrée/sortie du régulateur (20).

17. Appareil de chauffage électrique, en particulier pour le chauffage d'un liquide dans un véhicule automobile, comprenant un élément de chauffage CTP (5) et une électronique de test et de réglage, qui dispose d'un circuit de mesure du courant (22), pour tester le bon fonctionnement de l'appareil de chauffage (1) et pour régler ce dernier, **caractérisé en ce que** l'électronique de test et de réglage met en oeuvre un procédé selon l'une quelconque des revendications 1 à 17.

18. Appareil de chauffage selon la revendication 17, **caractérisé en ce que** l'électronique de test et de réglage est disposée dans un boîtier (2, 15) qui présente une paroi adjacente à un canal de passage (2, 3) du liquide à chauffer, un producteur de chaleur essentiel (14) de l'électronique de test et de réglage étant couplé à cette paroi (9) de façon à conduire la chaleur.

19. Appareil de chauffage selon la revendication 17 ou 18, **caractérisé en ce qu'**on prévoit un transistor de puissance (14) pour la mise en marche et la mise à l'arrêt de l'appareil de chauffage, qui est couplé à la paroi (9) de façon à conduire la chaleur.

20. Appareil de chauffage selon la revendication 18 ou 19, **caractérisé en ce que** la paroi adjacente au canal de passage (2, 3) du liquide à chauffer est aplatie.

21. Appareil de chauffage selon l'une quelconque des revendications 17 à 20, **caractérisé en ce qu'**on prévoit un capteur de température (13) pour enregistrer la température du liquide à chauffer, en particulier un carburant diesel, le capteur de température (13) et le transistor de puissance (14) étant couplés à la paroi (9) de façon à conduire la chaleur et le capteur de température (13) étant disposé, par rapport à la direction d'écoulement du liquide à chauffer, en amont du transistor de puissance (14).

22. Appareil de chauffage selon l'une quelconque des revendications 17 à 21, **caractérisé en ce que** l'électronique de test et de réglage est disposée sur une platine (10) qui peut venir s'insérer de manière échangeable dans le boîtier (2, 15).

23. Appareil de chauffage selon l'une quelconque des revendications 17 à 22, **caractérisé en ce qu'**un connecteur (11) avec des raccords d'alimentation de courant et de diagnostic (12) est appliqué sur la platine (10), et vient s'enficher conjointement avec la platine (10) dans le boîtier (2, 15).

24. Appareil de chauffage selon la revendication 23, **caractérisé en ce que** la platine (10) s'étend, avec le connecteur (11), transversalement par rapport au canal de passage (2, 3).

25. Appareil de chauffage selon l'une quelconque des revendications 22 à 24, **caractérisé en ce que** la platine (10) présente des trous remplis d'un métal, en dessous du producteur de chaleur essentiel (14).
